# EUROPEAN PATENT SPECIFICATION

(11) **EP 2 103 411 B1**
(45) Date of publication and mention of the grant of the patent: **07.12.2011**
(21) Application number: 08005196.4
(22) Date of filing: 19.03.2008
(51) Int. Cl.: B29C 47/10, B29C 44/34

(54) **Side feeding of reactive additives to improve reactive foam extrusion**
Seitliche Einspeisung von reaktiven Additiven für verbessertes Extrudieren von reaktivem Schaumstoff
Alimentation latérale d'additifs réactives pour améliorer l'extrusion de mousse réactive

(43) Date of publication of application: 23.09.2009
(73) Proprietor: Armacell Enterprise GmbH, 48153 Münster (DE)
(72) Inventor: Li, Jie, Dr., 4800 Zofingen (CH); Gräter, Horst, Dr., 48155 Münster (DE); Meller, Mika, Dr., 02880 Veikkola (FI)
(74) Representative: Sloboshanin, Sergej

(56) References cited:
- DE-A1-102006 038 197
- US-A1- 2003 155 063
- US-B1- 6 409 949
- DATABASE WPI Week 198004 Thomson Scientific, London, GB; AN 1980-06252C XP002494312 & JP 54 155484 A (HITACHI CABLE LTD) 7 December 1979 (1979-12-07)
- DATABASE WPI Week 200101 Thomson Scientific, London, GB; AN 2001-001941 XP002494313 & JP 2000 280319 A (SEKISUI CHEM IND CO LTD) 10 October 2000 (2000-10-10)
- DATABASE WPI Week 200263 Thomson Scientific, London, GB; AN 2002-585927 XP002494324 & JP 2002 113763 A (HERO KK) 16 April 2002 (2002-04-16)

## Description

The present invention relates to a foaming extrusion line for a reactive foam extrusion according to the preamble of claim 1 as well as to a corresponding reactive extrusion process to produce a foamed cellular material comprised of a thermoplastic polymer.

The extrusion foaming of polyethylene terephtalate (PET) resins to make low- or middle-density cellular materials may be divided basically in two technologies: the conventional extrusion of high-viscous/high-molecular PET resin or the reactive extrusion of low-viscosity resin, whereas in both cases foaming is accomplished by injecting physical blowing agent into the extruder or by using chemical blowing agents. In both technologies, a high melt strength of polyester melt during the foaming process is required to ensure a stable foaming process. The polyester resins of a high-viscosity type used for the first process are made generally with help of so-called solid state polymerization (ssp), in which a low-viscosity polyester is upgraded to higher viscosity one (intrinsic viscosity (I.V.) of over 0.8 dl/g), as disclosed for example in Phobos N.V., et al., EP0422282 A1 (1989), Al Ghatta, H., et al., WO9312164 A1 (1992), Al Ghatta, H., et al., EP0866089 B1 (1992), Sublett, B.J., WO9502623 A1 (1993), Sublett, B.J., US 5,399,595 (1994) and Al Ghatta, H., et al., US 5,422,381 (1994). In the reactive extrusion, chain extending, cross-linking, or branching additives (or alternatively concentrates containing such additives) are fed, pre-mixed with major polymer resin or separately, into preferably a twin-screw extruder generally through a hopper and mixed with polyester there. The mixture is mixed in molten state and charged with a blowing agent. Under high pressure the melt system is extruded through the forming die to produce a final foam product of a desired shape. Before exiting the extruder upgrading reactions must take place, where the viscosity of the polyester melt increases and therefore the melt strength is improved, providing necessary stability for the foaming process, as disclosed for example in Al Ghatta, H., et al., W09312164 A1 (1992), Al Ghatta, H., et al., US 5,422,381 (1994), Ozaki, Y., et al., JP 59-210955 (1984), Hayashi, M., et al., EP 0372846 A2 (1989), Rotter, G.E., et al., US 5,288,764 (1993), Kemani, K.C., et al., WO9509884 A1 (1994), Al Ghatta, H., et al., EP0801108 A2 (1997).

The high-viscosity PET materials, which are processed by means of the conventional foam extrusion, are obtained mainly through rheologically upgrading of low-viscosity PET resins (I.V. below 0.8 dl/g). The upgrading process is, however, a complicated and highly cost/time-consuming procedure: after a pre-drying, the low-molecular PET resins are compounded with chain-extending or branching additives in an extrusion line. The compound is cooled down and pelletized. The compound granulates have to undergo a process of solid state polycondensation, wherein the materials are treated by an inert gas or in vacuum both at 170-230°C in a reactor, until the intrinsic viscosity of polyester reaches a value higher than 0.8 dl/g, preferably 1.25 dl/g, as disclosed for example in Phobos N.V., et al., EP0422282 A1 (1989), Al Ghatta, H., et al., WO9312164 A1 (1992), Al Ghatta, H., et al., EP0866089 B1 (1992) and Sublett, B.J., WO9502623 A1 (1993). The upgraded PET resins can be foam extruded. The whole process chain of such foam production contains therefore the following steps: drying of starting polyester and additives => compounding => pelletizing => ssp => packaging => drying polyester resin and concentrate => feeding of raw material into foaming extruder => gas injection => foam extrusion etc. The disadvantage of this process is thus obvious.

US 2003/155063 A1 provides a continuous manufacturing method of thermoplastic polyester resin foam characterized by adding a cross-linking agent to a thermoplastic polyester resin, feeding into an extruder, fusing and kneading in the extruder to increase the weight-average molecular weight of the resin, evacuating and sucking from the barrel of the extruder to remove moisture from the fused resin, injecting a foaming agent into the fused resin to obtain a formed fused resin, and extruding and foaming it from the extruder into a low pressure region, and a manufacturing apparatus of thermoplastic polyester resin foam comprising an extruder having a vent port in the portion corresponding to the resin fusing section of the barrel, an extruder having a foaming agent pressure feed port on the way of the barrel, a connection tube for coupling these two extruders, an evacuating device consecutive to the vent port, and a die attached to the front end of the extruder.

JP 54 155484 A discloses injection of a mixed liquid made from a cross-linking agent and an antioxidant into an extruding machine at near around a resin supply port. A polyethylene resin is supplied into a cylinder of the extruding machine through the supply port, and the mixed liquid is injected from an injection hole, with a mulling processed by a screw. After having applied an extrusion coating to the periphery of a conductor wire that passes through an extrusion port, a thermal cross-linking treatment is processed. In such processing, a better compatibility can be provided mutually between the cross-linking agent and the antioxidant and the resin, with the bloom phenomenon eliminated, capable of uniformly mixing.

JP 2000 280319 A proposes a method for manufacturing a thermoplastic resin cross-linked foamed sheet that comprises the steps of introducing a thermoplastic resin and a thermal composition type foaming agent into an extruder, then mixing with a cross-linking assistant from an inlet on the way of the extruder, melt kneading the mixture, extruding the sheet, irradiating an ionizing radiation to the sheet to crosslink it, and then heating to foam it. In this case, the assistant is mixed by press injecting it, and when the assistant is not press injected, a gas is introduced into the inlet.

JP 2002 113763 A deals with a method for forming a foamed item cover layer on a pipe that includes a step of sending a cover layer forming molten resin to a forming process without mixing a foaming and cross-linking agent therewith, a step of mixing the foaming and cross-linking agent with the molten resin just before forming and a step of foaming and cross-linking the resin while covering a raw material pipe with the resin. A foamed item cover layer forming apparatus is a foamed item covering die having a raw material resin supply inlet on an outer circumference of a pass-through hole of a raw material supply pipe in a direction intersecting the pass-through hole, wherein a mixing portion of a foaming and cross-linking agent is arranged in the vicinity of the raw material supply inlet of the foamed item covering die, and protrusions are mounted in a raw material resin passage of the foamed item covering die to change the resin flow, the protrusions being located at different positions in the direction of the resin flow.

In comparison with the above described foaming process, some of said steps are unnecessary, if employing reactive extrusion foaming: The multifunctional chain-extending/branching additives such as dianhydride of a tetracarboxylic acid or multifunctional glycidyl ester are incorporated directly into the starting, low-viscosity PET (mostly I.V. lower than 0.8 dl/g) in an extruder, preferably twin-screw extruder. After melting of the compound in the melting zone, the chemical upgrading of PET molecules is carried out, followed by the ordinary foam extrusion from this zone. The reactive extrusion can be summarized as: drying of starting polyester and additives => feeding of PET and additives/concentrates into extruder => gas injection => reactive upgrading => foam extrusion. Beside reduced process steps, the reactive foam extrusion particularly enables an upgrading of polymer molecules during the extrusion process. This kind of molecular upgrading increases the melt viscosity during the process and improves the melt strength as well as the foaming stability. In contrast, a conventional extrusion process causes generally a molecular degradation which results in a property reduction of the virgin raw material. The reactive extrusion foaming of polyester such as PET co- or homopolymer represents thus a substantially economic and technical advantage.

The best economic advantage of a reactive foam extrusion is achieved by directly incorporating the multifunctional chain-extending/branching additives, separately or pre-mixed with polyester and other compounds, into the polyester extrusion line. Like described in the early inventions, for example in Al Ghatta, H., et al., WO9312164 A1 (1992), Al Ghatta, H., et al., US 5,422,381 (1994), Ozaki, Y., et al., JP 59-210955 (1984), Hayashi, M., et al., EP 0372846 A2 (1989), the additives capable of chain-extending or branching polyester are fed into the polyester extrusion line directly or as a pre-dried mixture through the hopper. However, an incorporation of such reactive additives in the form of powder directly into the extrusion line can result in material appearance of a fluid-like state by fluidization (air flow in powder) in the feeding zone of an extruder, first of all. The fluidization interferes with an effective and consistent conveying of solid state raw materials in the extruder. Second of all, the solid powder may affect a well dispersive mixing of additives with polyester melt. Rotter, G.E., et al., US 5,288,764 (1993) confirmed large variation in product quality during such PET foam extrusion of more than an hour. Instability of the process was indicated, as per Rotter, G.E., et al., US 5,288,764 (1993), by the fact that the extruder torque and pressure were observed to double or halve without any change in process settings. The inherent viscosity of samples exhibited similar wide fluctuations. These factors resulted in PET foams with large density and microstructure inconsistencies. The patentees of Rotter, G.E., et al., US 5,288,764 (1993) were unable to attribute these inconsistencies to feeder variations, moisture effects or equipment variations. The third disadvantage of such incorporation can be seen in limitation of additives or polymer modifiers. Additives or polymer modifiers whose melting point is much lower than the drying temperature of the polyester resin or setting temperature at the feeding zone of the extruder can be molten already in the dosing device or in the feeding zone of the extruder. In this case the feeding or transport of solid raw materials is negatively impacted or even blocked.

To reduce or eliminate the instability problems of the reactive foam extrusion, use of a concentrate (masterbatch) like in Rotter, G.E., et al., US 5,288,764 (1993), Kemani, K.C., et al., WO9509884 A1 (1994), Al Ghatta, H., et al., EP0801108 A2 (1997) is recommended, obtained by melt processing a multifunctional chain-extending/branching compound and a carrier polymer. The concentrate is mixed at given levels with the polyester in an extruder (preferably twin-screw extruder) to be foamed in a stable process. The multifunctional chain-extending/branching compound contains an anhydride of a carboxylic acid or epoxy groups, while PET, PC or even polyolefin can be employed as carrier material in the concentrate. Nucleate or other components can also be compounded into the concentrate. However, preparation of such concentrates means additional process steps (drying of raw materials => compounding => pelletizing => packaging of concentrates), which affect the economic advantage of reactive foaming process.

The problem underlying the invention is to provide a foaming extrusion line for reactive foam extrusion as well as a corresponding reactive extrusion process to produce a foamed cellular material, which would allow to improve the cell structure and a foam quality, thereby providing a low cost production.

This object is achieved with the features of claim 1, embodiments of which are subject of subclaims 2 to 7 and, correspondingly, with the features of claim 8, embodiments of which are subject of subclaims 9 to 11.

The current invention refers to an alternative solution or even an improvement to the above presented technologies. The improvement is realized with help of two feeding processes: 1) Direct feeding of multifunctional chain-extending/branching compounds into the melting zone of a production extruder with help of a screw feeder or 2) side feeding of such compounds incl. other components (nucleate and stabilizers for instance) by using a compounding extruder.

Reactive extrusion foaming of polyester resins shows not only the advantage in increase of melt viscosity and stability, which improves the cell structure and foam quality during bubble expansion, but also economic benefits due to less process steps in comparison to foam extrusion with help of ssp process. In addition, the reactive extrusion enables more flexibility during production in terms of required product properties.

A reactive foam extrusion without preparation of concentrates obtained by melt processing such additives with a carrier polymer was already practiced at laboratory extruders by feeding said additives directly into the hopper of the extruder. These additives in the form of powder may cause, however, fluidization in first, transport zone of the extruder, a solid convey of fluid-like state. In addition, no optimal dispersive mixing of such additives can be expected in the resin melt. A proper feeding of the additives into the extruder is therefore of importance and can contribute to an optimal foaming process and cell structure during reactive foam extrusion, if a direct incorporation of additives in the form of powder is required.

Beside the polyester resin as major component in raw material composition, different additives are added into the foaming extrusion line for the designed chemical reaction and process or property improvement. Processed are mainly polyethylene terephtalate (PET) homo- or copolymer, PEN or glycol modified polyester (virgin resin, recycling material, bottle or fiber grade etc.) with I.V.=0.6 - 1.0 dl/g (according to ASTM 4603). Reactive foaming of modified PET blends such as PET/PC, PET/PBT, PET/PP or other PET/Thermoplastics blends is also possible, as disclosed in Li, J., et al., European Patent Application No. 07 204 645.9 /EP07024645 (2007).

The chain-extending/branching additives applied in said reactive foaming process are very often anhydrides of multifunctional carboxylic acid such as maleic acid anhydride, trimellitic acid anhydride, pyromellitic acid dianhydride etc. Hydroxyl carboxylic acid and a compound or polymer with epoxy groups were also considered as such upgrading modifier. The amount of such reactive additives is within the range of 0.05 - 2.0 wt%, which was proved optimal for reactive foaming extrusion of polyester.

To improve the dispersive and distributive mixing of said additives, they can be embedded in a matrix polymer, a so-called carrier material comprised of thermoplastic polymers, before directly incorporating into the extruder. In this case, an extruder acting as the side-feeder is needed and carrier materials are necessary as well. Considerable carrier polymers are either one of polyester (different PET, PBT or PC grades), PS, PA and polyolefin (Polyethylene or PP homo-/copolymer) or a blend of them. The preferred blends are polyester/polyolefin or polyester/polyester compounds.

Moreover, processing aids such as antioxidants and processing/thermal stabilizer support reactive foam extrusion and the side feeding process by preventing the chain-extending/branching additives from or limiting an unrequested chemical reaction with carrier materials in feeding extruder. Another process (foaming) aid is nucleation agents like talc. They are all possibly included as components in reactive foaming recipes.

Beside stabilizers, it is also possible to employ flame retardants such as halogenated, charforming (for instance phosphorus-containing) or water-releasing compounds and UV stabilizers in the recipes.

For addition by the side feeding, all above mentioned additives can independently of each other be in the form of powder, liquid, granulate or in compacted form.

In the current invention, a physical blowing agent (often referred to as "gas") may be used for foaming and is typically carbon dioxide (CO₂), Nitrogen (N₂), alcohol, ketons, methylformate, hydrofluorocarbon (for example HFC-152a or HFC-134a) or a hydrocarbon (such as n-hexane, iso-pentane, n-pentane, cyclopentane and n-heptane), or a gas mixture of the above gases. The nucleate is generally talc, but alternative nucleate types can be used as well. Considerable is also a chemical blowing agent for middle or high density polyester foam (above 300 kg/m³ according to ISO 845). The chemical blowing agent is fed into the processing extruder in the side feeding step.

The extrusion line for the reactive extrusion foaming of polyester consists basically of a (primary) twin-screw extruder, side feeding equipment, gas injector, heat exchanger, static mixer and die for extrudate shaping. The extrusion line is followed by downstream equipment such as puller, convey rolls with air cooling, sawing unit, further cooling and grinding and packaging etc. Furthermore, the primary twin-screw extruder features a hopper for feeding of polyester resin or blend, a feeding port for addition of additives and a gas port for injection of physical blowing agent. The primary extruder can be alternatively a single-screw extruder instead of a twin-screw extruder.

Polyester or blend granulate enters the primary extruder through the hopper. The resin in solid state is conveyed in extrusion direction before compressed, plasticized and molten as well as mixed with additives incorporated by side feeding into the extruder. After melting of the solid additives or mixing of additives molten already in a compounding extruder as side feeder, the reactive upgrading of polyester molecular weight and the increase of melt viscosity begin, followed by gas injection and mixing with the injected gas. During the reactive upgrading of polyester resin, chain extension, branching or even cross-linking of polymer molecules take place. After the homogenization in the further mixing zone, the melt mixture is cooled down and the pressure for expansion is built up in the last zone of the extruder. The melt is pressed through the shaping die under high pressure. The foamed polyester with the required shape is extruded for calibration and further air cooling.

The invention will be described in more detail below with reference to examples shown in the drawings.
Fig. 1 shows the side feeding of additives by using a gravimetric/volumetric dosing station and a feeding screw,
Fig. 2 shows the side feeding of additives by using a compounding extruder,
Fig. 3 shows the side feeding of additives by using a compounding extruder in combination with gear pump, and
Fig. 4 shows the tandem extrusion line with side feeding of additives.

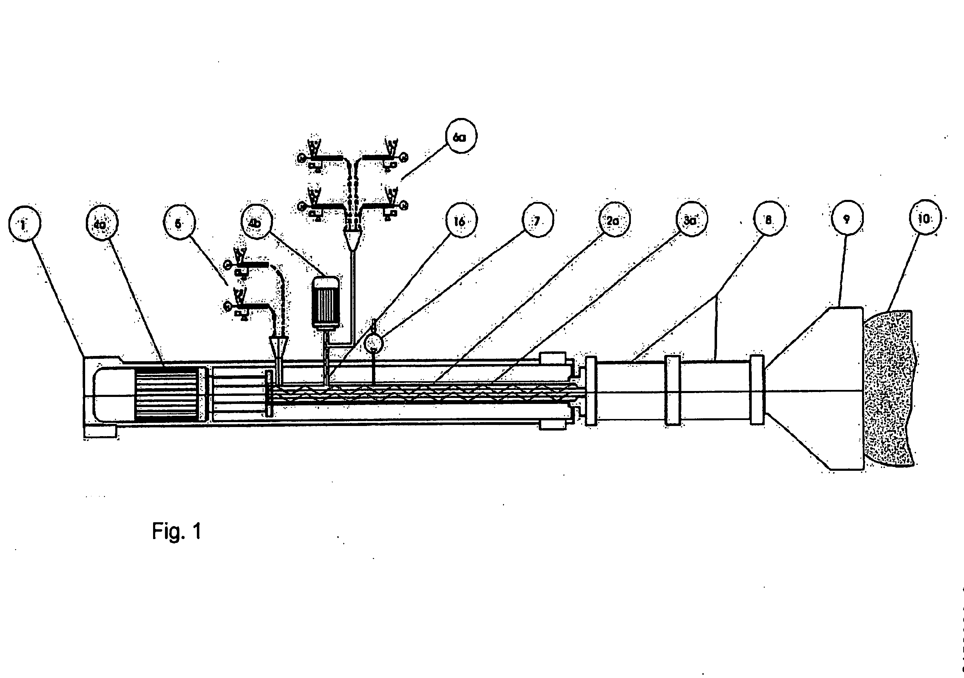

Fig. 1 shows a foaming extrusion line for a reactive foam extrusion having a primary extruder 1 with a hopper 5 for loading of major raw materials into a feeding zone of a primary extruder 1. The primary extruder 1 consists of mainly a screw 3a (preferably twin-screw) of extruder, which is actuated by a motor 4a, and a barrel 2a shown on Fig. 1, wherein in extruding direction beginning from the hopper 5 at the primary extruder 1 are arranged dosing feeder 6a for incorporation of reactive additives into the primary extruder 1 and a gas injector 7. The dosing feeder 6a is connected to the primary extruder 1 by a feeding screw 16 (driven by a motor 4b), which supports a precise and irreversible loading of reactive additives. The head of the primary extruder 1 is connected through a heat exchanger or static mixer 8 to an extrusion die 9, through which the foamed product 10 is preformed for obtaining a desired profile shape.

The direct side incorporation of the additives into the extruder can be implemented either with the help of a gravimetric/volumetric dosing feeder 6a equipped with the feeding screw 16 or by means of a compounding extruder (co- or counter-rotating twin-screw extruder preferably, but also single extruder). In the first case shown on Fig. 1, the feeding port 6 is positioned between a charging zone of solid resin and gas injection 7, preferably at the beginning of the compression zone of solid resin (to have the possibility of air escape without using a venting zone), but alternatively at the starting point of the melting zone or in partially filled melt area after melting zone. At such location, the pressure is low in the extruder, as described in Kohlgrüber, K., Der gleichläufige Doppelschneckenextruder, Hanser Verlag München (2007), and the melting of additives takes place almost together with the polymer resin. The mixing effect is optimal with this position of the side feeding port. The (volumetrically or gravimetrically) dosing feeder 6a is directed towards the feeding screw 16, which is connected to the side feeding port. This combination is applied for a defined feeding of said additives independently of each other or premixed.

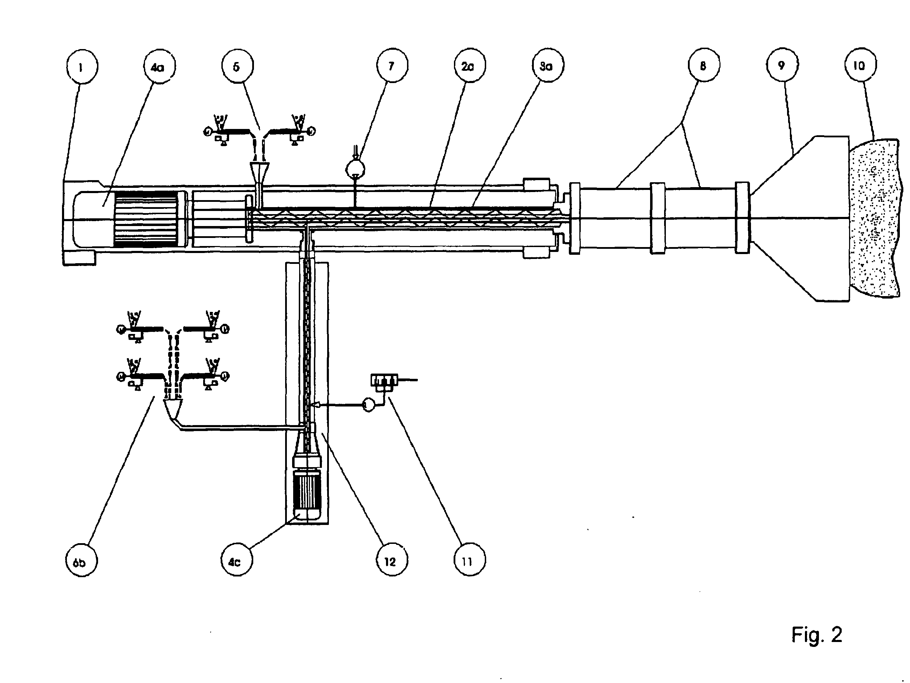

In the second case of direct side incorporation, the additives and carrier material are prepared/compounded by a compounding extruder 12 (parallel/conical co- or counter-rotating twin-screw extruder or single screw extruder), which is connected to the primary extruder 1 and which is shown on Fig. 2 at a location between the beginning of the melting zone and gas injection 7, preferably at the starting point of the melting zone, most preferably between melting and melt convey zone where the area can be designed partially filled or the melt pressure is low. The compounding extruder 12 acts for the side feeding of reactive additives into the primary extruder 1. The screw diameter D of the compounding extruder 12 is generally smaller than the screw diameter of the primary extruder 1, the length is preferably bigger than 30D for a sufficient homogenization. Use of process/thermal stabilizer is recommended to prevent the compound from or limit a too early chain-extending/branching reaction in the compounding extruder 12. This kind of direct incorporation is particularly advantageous for the additives or polymer modifiers whose melting point is much lower than the drying temperature of the polyester resin or the set temperature of the feeding zone at primary extruder 1, since the feeding of such materials is more flexible at said compounding extruder 12 or the temperature setting of feeding extruder is independent of the primary extruder 1. An addition of liquid additives is possible by positioning the liquid feeding port in the melt convey zone. The compounding extruder 12 can feature a vacuum removal of monomer, moisture or air through a venting port.

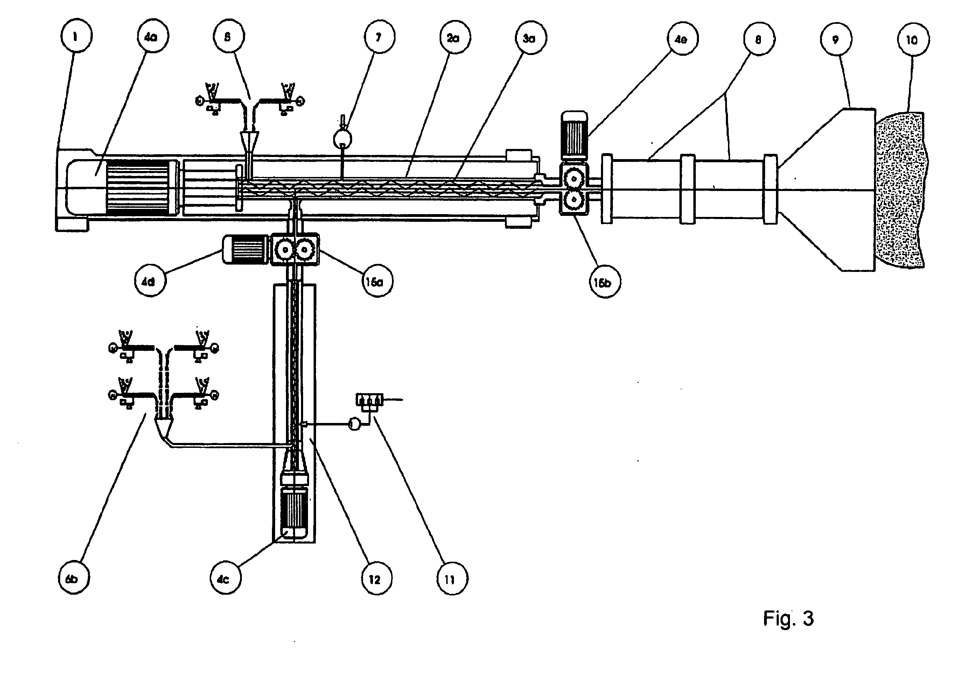

A first gear pump 15a can be applied between the compounding extruder 12 and primary extruder 1 to control the pressure which is needed for side feeding as shown in Fig. 3. This formation stabilizes the feeding process and ensures a sufficient feeding pressure to prevent the fed compound from reverse flow. An additional gear pump 15b in front of downstream equipment provides the required pressure to overcome the resistance and a stable extrusion process and serves for stabilization of foaming process.

In contrast to preparation of a concentrate, application of a compounding extruder for said side feeding is distinguished in two points: 1) The side feeding is a continuous process without any interruption and 2) some process steps of the concentrate preparation are obsolete: pelletizing, packaging, transport and drying of the concentrate for instance. The concentrate containing anhydrides of carboxylic acid is generally hygroscopic. A long-term storage of such concentrate tends to moisture absorption, which increases the process instability during polyester foam extrusion.

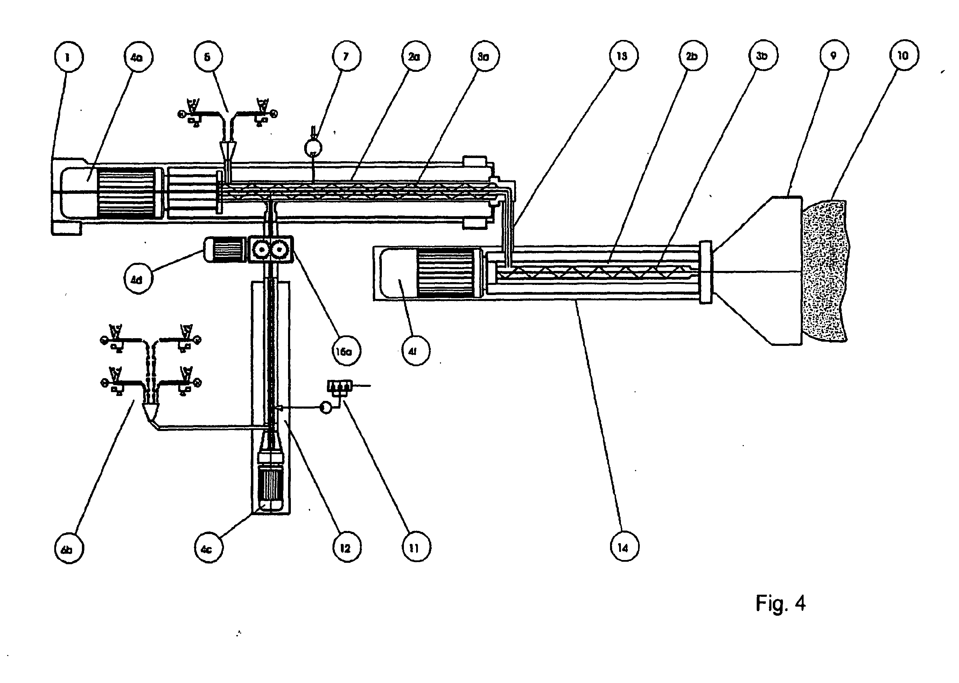

Beside the side feeding 6a/16, 12, the extrusion line can optionally comprise a secondary (single- or twin-screw) extruder 14 as a dynamic cooler connected through a transfer pipe 13 to the output of the primary extruder 1 and actuated by a motor 4f as shown on Fig. 4. The chemical reactions and gas injection are carried out mainly in the primary extruder 1, while the secondary extruder 14 is used mainly for cooling and further mixing, before the extrudate enters the downstream equipment. The primary and secondary extruder can be connected by a second gear pump 15b like in Fig. 3 (not shown).

### List of reference numerals

- 1: Primary (single or twin screw) extruder
- 2: Barrel of extruder
- 3: Screw of extruder
- 4: Motor
- 5: Hopper of primary extruder
- 6: Dosing feeder for side feeding
- 7: Gas injection
- 8: Heat exchanger or static mixer
- 9: Extrusion die
- 10: Foamed product
- 11: Liquid feeding
- 12: Compounding extruder for side feeding
- 13: Transfer pipe
- 14: Secondary cooling/mixing extruder
- 15: Gear pump
- 16: Feeding screw

## Claims

1. An extrusion line for reactive foam extrusion comprising
- a primary extruder (1) having a hopper (5) for loading of major raw materials into a feeding zone of the primary extruder (1) acting as a foam processing extruder
- a gas injector (7) being arranged at the primary extruder (1),
- a melt homogenization unit selected from melt mixer/static heat exchanger (8) and a secondary extruder (14) and
- an extrusion die (9),
**characterized by** a side feeding equipment selected from a gravimetric or volumetric dosing station (6a/16) and a compounding extruder (12) for loading of reactive additives in form of powder particularly and liquid into the primary extruder (1), wherein the side feeding equipment (6a/16, 12) is positioned between the feeding zone of the primary extruder (1) and the gas injector (7) for improvement of the dispersive mixing of said additives and polymer resin and process stability of foam extrusion.

2. The extrusion line according to claim 1, wherein in the primary extruder (1) of foaming process in extruding direction a feeding zone, a compression zone, a melting zone and a metering zone are successively positioned, wherein the side feeding equipment (6a/16, 12) is positioned preferably at the compression or at the melting zone.

3. The extrusion line according to claim 1 or 2, wherein the side feeding equipment is a gravimetric or volumetric dosing feeder (6a) supported by a feeding screw (16).

4. The extrusion line according to claim 1, wherein the compounding extruder (12) used as the side feeding equipment comprises further a dosing feeder (6b) and a liquid feeding port (11), the compounding extruder (12) being a twin-screw extruder designed for manufacturing of concentrates.

5. The extrusion line according to claim 1, wherein a first gear pump (15a) is arranged between the compounding extruder (12) and the primary extruder (1).

6. The extrusion line according to claim 1, wherein a second gear pump (15b) is arranged between the extrusion die (9) and the primary extruder (1).

7. The extrusion line according to one of the preceding claims, wherein the primary extruder (1) is single or twin screw extruder.

8. A reactive extrusion process to produce foamed cellular material comprised of a thermoplastic polymer by using an extrusion line of claim 1.

9. The process according to claim 8, wherein the thermoplastic polymer is
- a polyester, for example PET having an intrinsic viscosity from 0.2 to 1.3 dl/g, PBT, PC or
- a polyester blend, for example PET/PBT, PET/PC or PBT/PC, or PET/Polyolefin (such as PP homo- or copolymer, PE, EPDM or EPM) blend.

10. The process according to claim 8 or 9, wherein the reactive additives are at least one of the following compounds:
- chain-extending agent or chain-branching agent such as compounds with 2 or more anhydride or epoxy groups per molecule in the amount of 0.05-2.0 wt%,
- process/thermal stabilizer, for example hydrolytically stable phosphite, organophosphite or compounds comprising organophosphate in the amount of 0.01-1.5 wt%., and
- antioxidants, for instance hydroxyphenylakylphosphonic acid esters, acid esters and halfesters or compounds with two or more sterically hindered phenolic groups per molecule in the amount of 0.01-1.5 wt%.

11. The process according to one of the claims 8 to 10, wherein the reactive additives are loaded into the primary extruder (1) with carrier material being
- a polyester, for example PET having an intrinsic viscosity from 0.2 to 1.3 dl/g, PBT, PC or
- a polyester blend, for example PET/PBT, PET/PC or PBT/PC, or PET/Polyolefin blend, such as PP homo- or copolymer, PE, EPDM or EPM.

## Patentansprüche

1. Extrusionslinie zur Reaktivschaumextrusion umfassend
- einen Primärextruder (1) mit einem Trichter (5) zum Laden von Hauptrohmaterialien in einen Zuführbereich des Primärextruders (1), der als Schaumverarbeitungsextruder wirkt,
- einen Gasinjektor (7), der an dem Primärextruder (1) angeordnet ist,
- eine Schmelz-Homogenisierungs-Einheit, die aus einem Schmelzmischer/statischen Wärmetauscher (8) und einem Sekundärextruder (14) ausgewählt ist, und
- ein Extrusionswerkzeug (9),
**gekennzeichnet durch** eine Seitenzuführeinrichtung, die aus einer gravimetrischen oder volumetrischen Dosierstation (6a/16) und einem Compoundierungsextruder (12) zum Laden von reaktiven Additiven in Form von insbesondere Pulver und von Flüssigkeit in den Primärextruder (1) ausgewählt ist, wobei die Seitenzuführeinrichtung (6a/16, 12) zur Verbesserung der dispersiven Vermischung der Additive mit Polymerharz und der Prozessstabilität der Schaumextrusion zwischen dem Zuführbereich des Primärextruders (1) und dem Gasinjektor (7) positioniert ist.

2. Extrusionslinie nach Anspruch 1, wobei in dem Primärextruder (1) eines Schäumungsverfahrens in der Extrusionsrichtung nacheinander ein Zuführbereich, ein Kompressionsbereich, ein Schmelzbereich und ein Abmessbereich positioniert sind, wobei die Seitenzuführeinrichtung (6a/16, 12) vorzugsweise an dem Kompressions- oder an dem Schmelzbereich positioniert ist.

3. Extrusionslinie nach Anspruch 1 oder 2, wobei die Seitenzuführeinrichtung ein gravimetrischer oder volumetrischer Dosierzuführer (6a) ist, der von einer Zuführschnecke (16) getragen ist.

4. Extrusionslinie nach Anspruch 1, wobei der als Seitenzuführeinrichtung verwendete Compoundierungsextruder (12) weiterhin einen Dosierzuführer (6b) und einen Flüssigkeitszuführkanal (11) umfasst, wobei der Compoundierungsextruder (12) ein Doppelschneckenextruder ist, der für die Herstellung von Konzentraten ausgelegt ist.

5. Extrusionslinie nach Anspruch 1, wobei zwischen dem Compoundierungsextruder (12) und dem Primärextruder (1) eine erste Zahnradpumpe (15a) angeordnet ist.

6. Extrusionslinie nach Anspruch 1, wobei zwischen dem Extrusionswerkzeug (9) und dem Primärextruder (1) eine zweite Zahnradpumpe (15b) angeordnet ist.

7. Extrusionslinie nach einem der vorhergehenden Ansprüche, wobei der Primärextruder (1) ein Einschnecken- oder ein Doppelschneckenextruder ist.

8. Reaktives Extrusionsverfahren zur Herstellung von geschäumtem zellularen Material, das ein thermoplastisches Polymer umfasst, unter Verwendung einer Extrusionslinie nach Anspruch 1.

9. Verfahren nach Anspruch 8, wobei das thermoplastische Polymer
- ein Polyester, beispielsweise PET mit einer Eigenviskosität von 0,2 bis 1,3 dl/g, PBT, PC, oder
- ein Polyester-Gemisch, beispielsweise ein PET/PBT-, PET/PC-, PBT/PC- oder PET/Polyolefin (wie etwa ein PP-Homo- oder -Copolymer, PE, EPDM oder EPM)-Gemisch, ist.

10. Verfahren nach Anspruch 8 oder 9, wobei die reaktiven Additive wenigstens eines der folgenden Verbindungen sind:
- 0,05 - 2,0 Gewichtsprozent eines kettenverlängernden oder kettenverzweigenden Agens, wie etwa Verbindungen mit 2 oder mehr Anhydrid- oder Epoxygruppen pro Molekül,
- 0,01 - 1,5 Gewichtsprozent eines Prozess-/Thermostabilisators, beispielweise hydrolytisch stabilem Phosphit, Organophosphit oder Verbindungen, die Organophosphat umfassen, und
- 0,01 - 1,5 Gewichtsprozent Antioxidantien, beispielsweise hydroxyphenylakylphosphonische Säureester, Säureester und Halbester oder Verbindungen mit zwei oder mehr sterisch gehinderten Phenolgruppen pro Molekül.

11. Verfahren nach einem der Ansprüche 8 bis 10, wobei die reaktiven Additive in den Primärextruder (1) geladen werden, wobei das Trägermaterial
- ein Polyester, beispielsweise PET mit einer Eigenviskosität von 0,2 bis 1,3 dl/g, PBT, PC, oder
- ein Polyester-Gemisch, beispielsweise ein PET/PBT-, PET/PC-, PBT/PC- oder PET/Polyolefin-Gemisch (wie etwa ein PP-Homo- oder -Copolymer, PE, EPDM oder EPM), ist.

## Revendications

1. Ligne d'extrusion pour une extrusion de mousse réactive comprenant
- une extrudeuse primaire (1) ayant une trémie (5) pour le chargement de matières premières principales dans une zone d'alimentation de l'extrudeuse primaire (1) agissant comme une extrudeuse de traitement de mousse,
- un injecteur de gaz (7) étant agencé au niveau de l'extrudeuse primaire (1),
- une unité d'homogénéisation de matière fondue choisie parmi un mélangeur de matière fondue/échangeur thermique statique (8) et une extrudeuse secondaire (14), et
- une filière d'extrusion (9),
**caractérisée par** un équipement d'alimentation latérale choisi parmi une station de dosage gravimétrique ou volumétrique (6a/16) et une extrudeuse de malaxage (12) pour le chargement d'additifs réactifs sous la forme d'une poudre particulaire et d'un liquide dans l'extrudeuse primaire (1), dans laquelle l'équipement d'alimentation latérale (6a/16, 12) est positionné entre la zone d'alimentation de l'extrudeuse primaire (1) et l'injecteur de gaz (7) pour une amélioration du mélange par dispersion desdits additifs et de la résine polymère et de la stabilité de traitement d'extrusion de mousse.

2. Ligne d'extrusion selon la revendication 1, dans laquelle, dans l'extrudeuse primaire (1) de traitement d'expansion dans un sens d'extrusion, une zone d'alimentation, une zone de compression, une zone de fusion et une zone de mesure sont successivement positionnées, dans laquelle l'équipement d'alimentation latérale (6a/16, 12) est positionné préférablement au niveau de la zone de compression ou de fusion.

3. Ligne d'extrusion selon la revendication 1 ou 2, dans laquelle l'équipement d'alimentation latérale est un système d'alimentation et de dosage gravimétrique ou volumétrique (6a) supporté par une vis d'alimentation (16).

4. Ligne d'extrusion selon la revendication 1, dans laquelle l'extrudeuse de malaxage (12) utilisée comme l'équipement d'alimentation latérale comprend en outre un système d'alimentation et de dosage (6b) et un orifice d'alimentation de liquide (11), l'extrudeuse de malaxage (12) étant une extrudeuse à vis double conçue pour la fabrication de concentrés.

5. Ligne d'extrusion selon la revendication 1, dans laquelle une première pompe à engrenages (15a) est agencée entre l'extrudeuse de malaxage (12) et l'extrudeuse primaire (1).

6. Ligne d'extrusion selon la revendication 1, dans laquelle une deuxième pompe à engrenages (15b) est agencée entre la filière d'extrusion (9) et l'extrudeuse primaire (1).

7. Ligne d'extrusion selon l'une des revendications précédentes, dans laquelle l'extrudeuse primaire (1) est une extrudeuse à vis simple ou double.

8. Procédé d'extrusion réactive pour produire un matériau cellulaire expansé comprenant un polymère thermoplastique en utilisant une ligne d'extrusion selon la revendication 1.

9. Procédé selon la revendication 8, dans lequel le polymère thermoplastique est
- un polyester, par exemple un PET ayant une viscosité intrinsèque de 0,2 à 1,3 dl/g, un PBT, un PC ou
- un mélange de polyesters, par exemple un mélange PET/PBT, PET/PC ou PBT/PC, ou PET/polyoléfine (telle qu'un homo- ou copolymère de PP, un PE, l'EPDM ou l'EPM).

10. Procédé selon la revendication 8 ou 9, dans lequel les additifs réactifs sont au moins un des composés suivants:
- un agent d'extension de chaîne ou un agent de ramification de chaîne tel que des composés avec 2 groupes anhydride ou époxyde ou plus par molécule dans la quantité de 0,05 à 2,0% en poids,
- un stabilisant de traitement/thermique, par exemple un phosphite, un organophosphite ou des composés hydrolytiquement stables comprenant un organophosphate dans la quantité de 0,01 à 1,5% en poids, et
- des antioxydants, par exemple des esters d'acide hydroxyphénylalkylphosphonique, des esters et demi-esters d'acide ou des composés avec deux groupes phénoliques à encombrement stérique ou plus par molécule dans la quantité de 0,01 à 1,5% en poids.

11. Procédé selon l'une des revendications 8 à 10, dans lequel les additifs réactifs sont chargés dans l'extrudeuse primaire (1) avec un matériau support étant
- un polyester, par exemple un PET ayant une viscosité intrinsèque de 0,2 à 1,3 dl/g, un PBT, un PC ou
- un mélange de polyesters, par exemple un mélange PET/PBT, PET/PC ou PBT/PC, ou PET/polyoléfine, telle qu'un homo- ou copolymère de PP, un PE, l'EPDM ou l'EPM.
